# EUROPÄISCHE PATENTSCHRIFT

(11) **EP 2 665 784 B1**
(45) Veröffentlichungstag und Bekanntmachung des Hinweises auf die Patenterteilung: **31.10.2018**
(21) Anmeldenummer: 12700131.1
(22) Anmeldetag: 12.01.2012
(51) Int. Cl.: C09D 7/00

(54) **VERWENDUNG VON POLYHYDROXYALKANOATEN ALS ADDITIVE IN BESCHICHTUNGSZUSAMMENSETZUNGEN**
USE OF POLYHYDROXYALKANOATES AS ADDITIVES IN COATING COMPOSITIONS
UTILISATION DE POLYHYDROXYALKANOATES EN TANT QU'ADDITIFS DANS DES COMPOSITIONS DE REVÊTEMENT

(30) Priorität: 17.01.2011 EP 11151181
(43) Veröffentlichungstag der Anmeldung: 27.11.2013
(73) Patentinhaber: BYK Netherlands B.V., 7418 EN Deventer (NL)
(72) Erfinder: HANS, Marc, 46483 Wesel (DE); JAUNKY, Wojciech, 46483 Wesel (DE); FRANK, Albert, 46483 Wesel (DE); LENZ, Petra, 46483 Wesel (DE); LUTTIKHEDDE, Hendrik, 46483 Wesel (DE)
(74) Vertreter: Leifert & Steffan
(86) Internationale Anmeldenummer: PCT/EP2012/050410
(87) Internationale Veröffentlichungsnummer: WO 2012/098041

(56) Entgegenhaltungen:
- EP-A1- 0 772 654
- EP-A2- 1 398 301
- WO-A1-2008/068003
- JP-A- 2004 018 723
- US-A1- 2005 112 171
- US-A1- 2008 254 209

## Beschreibung

### Gebiet der Erfindung

Die vorliegende Erfindung betrifft die Verwendung von Polyhydroxyalkanoaten (PHA) als Additive in Beschichtungszusammensetzungen. Die vorliegende Erfindung betrifft zudem Beschichtungszusammensetzungen, enthaltend PHA. Die vorliegende Erfindung betrifft auch Beschichtungen, die mit den Beschichtungszusammensetzungen, enthaltend PHA hergestellt wurden.

### Stand der Technik

Auf dem Gebiet der Lackindustrie ist es bekannt, anorganische Partikel wie beispielsweise hoch poröses, amorphes Siliciumdioxid als Additive in Beschichtungszusammensetzungen, insbesondere Klarlacken, einzusetzen, um dadurch beispielsweise den Glanz zu reduzieren. Durch die Glanzreduktion beziehungsweise Erhöhung des Mattierungsgrads wird ein bestimmtes optisches Profil von Beschichtungen erlangt, das aufgrund seines speziellen Charakters heutzutage immer beliebter wird. Die am meist bekannten und gängig eingesetzten Typen dieser Siliciumdioxid-Partikel werden durch Gelierung oder Fällung von Kieselsäuren erhalten. Anschließend wird das dabei entstandene Siliciumdioxid gewaschen, getrocknet und gemahlen. Ein weiterer Typ von Siliciumdioxid-Partikel wird durch auf unterschiedliche Weise durchführbare Agglomeration von pyrolytischem Siliciumdioxid hergestellt. Dieser letztere Typ (beispielsweise Acematt TS 100 von Evonik) besitzt im Vergleich zu den zuvor genannten Partikeln eine signifikant erhöhte Mattierungseffizienz (10 % bis 15 %). Zum Erhalt eines bestimmten Mattierungsgrads ist daher ein wesentlich geringerer Anteil von Partikeln in der jeweiligen Beschichtungszusammensetzung notwendig als bei den erstgenannten Partikeltypen.
Allerdings führt der Produkttyp mit erhöhter Mattierungseffizienz, wenn er in Beschichtungszusammensetzungen, beispielsweise Lacken, eingesetzt wird, zu einer sehr starken Erhöhung der Viskosität. Dieser unerwünschte Effekt der Viskositätserhöhung tritt bereits bei solch geringen Partikelkonzentrationen auf, die zumindest notwendig sind, um den gleichen Mattierungseffekt zu erreichen, wie mit anderen Produkten, beispielsweise den weiter oben beschriebenen Partikeltypen. Der erhöhten Mattierungseffizienz steht also die starke Viskositätserhöhung entgegen. Zudem werden häufig auch nachteilige Einflüsse hinsichtlich der mechanischen Eigenschaften der Beschichtungszusammensetzungen und/oder Beschichtungen beobachtet. Ergänzend sei hierzu auf "Lackadditive, Johan Bieleman, Weinheim, New York; Chichester; Brisbane; Singapore; Toronto: Wiley, 1998" verwiesen.

In der WO 96/03468 A1 werden Polyhydroxyalkanoat enthaltende Beschichtungszusammensetzungen beschrieben, die zu Beschichtungen mit verbesserter Schnellhärte und Klebfreiheit führen. Zur Mattierung kann in diesen Zusammensetzungen Kieselsäure eingesetzt werden.

Ebenfalls bekannt ist der Einsatz von bestimmten Wachsen als Mattierungsmittel in Beschichtungszusammensetzungen. Solche Wachse besitzen in der Regel eine geringere Mattierungseffizienz als die oben beschriebenen Siliciumdioxid-Partikel. Es bestehen verschiede Ansätze, um die Mattierungseffizienz dieser Wachse zu erhöhen. So beschreibt die US 2003/0154885 A1 die Verwendung von Mischungen spezieller Wachse zur Verbesserung verschiedener Eigenschaften von Beschichtungszusammensetzungen. Unter anderem wird dabei die Verbesserung der Mattierungseffizienz angesprochen. Die Mischungen enthalten ein Homo- oder Copolymer von C₂-C₁₈-α-Olefinen, die mittels Metallocen-Katalyse hergestellt werden, sowie mindestens ein weiteres Wachs ausgewählt aus der Gruppe unterschiedlicher bekannter Wachse. Nachteilig ist allerdings, dass die Wachse in bestimmten Beschichtungssystemen eine nur geringe Dispergierbarkeit besitzen können.

In der WO 2008/068003 A1 wird eine Kombination von Siliciumdioxid-Partikeln mit Wachsen beschrieben. Dabei werden Silicium-Partikel, die mit Wachsen beschichtet sind, als Mattierungsmittel eingesetzt.

Ebenfalls bekannt ist der Einsatz von speziellen aliphatischen Polyurethanen und hochvernetzten Acrylester-Kügelchen als Mattierungsmittel (beispielsweise erhältlich von Microchem, Switzerland). Zusätzlich führen solche Mattierungsmittel zu Lackoberflächen, die sich besonders weich und angenehm anfühlen. Aufgrund der geringeren Mattierungseffizienz dieser Mattierungsmittel im Vergleich zu den oben beschriebenen Silicium-Dioxid Partikel sind größere Mengen erforderlich.

Weiterhin werden organische Mattierungsmittel auf Basis von Polymethylharnstoffen beschrieben (beispielsweise erhältlich unter der Handelsbezeichnung Pergopak). Diese Harze bieten einen guten Mattierungseffekt in verschiedenen Beschichtungssystemen. Zudem werden eine gute mechanische Widerstandsfähigkeit sowie angenehm anzufühlende Oberflächen von Lackierungen erreicht.

Ein immer relevanteres Problem im Zusammenhang mit synthetischen, auf petrochemischen Rohstoffen basierenden Polymeren, wie beispielsweise den oben genannten Wachsen und organischen Mattierungsmitteln, ist deren geringe Bioabbaubarkeit. Die dadurch resultierende Akkumulation in der Umwelt führt zu einer Umweltbelastung. Aus diesem Grund kommt den PHA immer größere Bedeutung als alternative Rohstoffquelle für synthetische Polymere zu. Solche auf PHA basierende synthetische Polymere besitzen im Gegensatz zu auf petrochemischen Rohstoffen basierenden Polymeren eine angemessene Bioabbaubarkeit. PHA sind Polyester, die von unterschiedlichen Bakterien aufgebaut werden und von diesen bei Nährstoffmangel als Kohlenstoff und Energiequelle genutzt werden. Poly-3-hydroxybutyrat (P-3HB) ist das am besten bekannte und untersuchte PHA. Durch entsprechende Zufütterung in Fermentationsprozessen und anschließende Aufreinigung können P-3HB-basierende Copolymere erhalten werden, die neben 3-Hydroxybutansäure unterschiedliche Monomere wie beispielsweise 3-Hydroxyvaleriansäure, 4-Hydroxybutansäure und/oder unterschiedliche C₆-C₁₆-3-Hydroxyfettsäuren enthalten können. PHA werden für die Herstellung bioabbaubarer Plastikmaterialen eingesetzt, die beispielsweise als Verpackungsmaterialien eingesetzt werden.

### Aufgabe

Aufgabe der vorliegenden Erfindung war es, eine neue Möglichkeit zur Erhöhung der Mattierungseffizienz von Beschichtungszusammensetzungen beziehungsweise zur Erhöhung des Mattierungsgrads von mit Beschichtungszusammensetzungen aufgebauten Beschichtungen zu finden, um dadurch das aufgrund seines speziellen Aussehens heutzutage immer beliebtere mattierte optische Profil von Beschichtungen zu erreichen. Dabei sollten zudem weitere wichtige Qualitätsmerkmale von Beschichtungszusammensetzungen beziehungsweise von mit Beschichtungszusammensetzungen aufgebauten Beschichtungen erfüllt sein beziehungsweise verbessert werden. Insbesondere sollten typische Eigenschaften von Beschichtungszusammensetzungen und Beschichtungen wie die Viskosität, der Verlauf, die Kratzfestigkeit, die Transparenz und die Blockfestigkeit sowie die haptischen Eigenschaften von Beschichtungen verbessert werden. Es sollte insbesondere eine ausgewogene Balance der genannten Eigenschaften erhalten werden. Dabei sollten die genannten Eigenschaften, insbesondere die Mattierungseffizienz beziehungsweise der Mattierungsgrad, durch bestimmte, den Beschichtungszusammensetzungen beigegebene Additive erreicht werden, die nicht auf petrochemischen Rohstoffen basieren. Dadurch sollte in Beschichtungszusammensetzungen beziehungsweise Beschichtungen insbesondere der Gehalt synthetischer Materialien, die eine nur geringe Bioabbaubarkeit aufweisen, verringert werden und trotzdem die oben beschriebenen hervorragenden Eigenschaften, insbesondere die gute Mattierungseffizienz, erzielt werden.

### Erfindungsgemäße Lösung

Im Rahmen der vorliegenden Erfindung wurde festgestellt, dass die oben formulierten Aufgaben durch den Einsatz von Polyhydroxyalkanoaten gelöst werden konnten.

Gegenstand der vorliegenden Erfindung ist demnach die Verwendung von Polyhydroxyalkanoaten als Additive in Beschichtungszusammensetzungen gemäß Anspruch 1.

Gegenstand der vorliegenden Erfindung ist zudem eine Beschichtungszusammensetzung enthaltend Polyhydroxyalkanoate gemäß Anspruch 10.
Des Weiteren ist eine Beschichtung gemäß Anspruch 14, die mit der erfindungsgemäßen Beschichtungszusammensetzung enthaltend Polyhydroxyalkanoate auf einem Substrat hergestellt wurde, Gegenstand der vorliegenden Erfindung.

Durch die erfindungsgemäße Verwendung wird eine deutliche Glanzerniedrigung in Beschichtungen beziehungsweise eine Erhöhung der Mattierungseffizienz von Beschichtungszusammensetzungen erreicht. Ferner besitzen die erfindungsgemäßen Beschichtungszusammensetzungen beziehungsweise Beschichtungen hervorragende weitere Eigenschaften, insbesondere eine nur geringfügig erhöhte Viskosität, einen guten Verlauf, eine hohe Kratzfestigkeit, eine niedrige Transparenz und eine gute Blockfestigkeit sowie wünschenswerte haptische Eigenschaften. Zudem basieren die PHA nicht auf petrochemischen Rohstoffen, sodass in den erfindungsgemäßen Beschichtungszusammensetzungen und Beschichtungen der Anteil petrochemischer Materialien verringert werden kann und trotzdem die beschriebenen hervorragenden Eigenschaften erzielt werden können.

### Ausführliche Beschreibung der Erfindung

Die PHA werden erfindungsgemäß als Additive, insbesondere als Mattierungsmittel, in Beschichtungszusammensetzungen verwendet. Wie dem Fachmann auf dem Gebiet bekannt ist, sind unter Additiven gängigerweise Hilfsstoffe beziehungsweise Substanzen zu verstehen, die einem System, beispielsweise einer Beschichtungszusammensetzung, zugesetzt werden, um diesem System oder einem daraus hergestellten System, beispielsweise einer Beschichtung, spezifische Eigenschaften, beispielsweise die oben genannten vorteilhaften Eigenschaften wie einen hohen Mattierungsgrad, eine hohe Kratzfestigkeit und/oder eine verbesserte Haptik, zu verleihen. Ergänzend sei hierzu auf Römpp-Lexikon Lacke und Druckfarben, Georg Thieme Verlag, Stuttgart, New York, 1998, Seite 13 verwiesen. Je nach Verwendung beziehungsweise Einsatzgebiet werden die PHA also erfindungsgemäß als unterschiedliche Additive verwendet. Beispielsweise können die PHA als Mattierungsmittel verwendet werden. Möglich ist aber auch die spezifische Verwendung als Additiv um beispielsweise die haptischen Eigenschaften zu verbessern, um die Viskosität speziell zu beeinflussen, um die Kratzfestigkeit zu verbessern, um den Verlauf zu optimieren oder die Blockfestigkeit zu erhöhen. Natürlich können die PHA auch als Additive verwendet werden, welche mehrere unterschiedliche Eigenschaften von Beschichtungszusammensetzungen und/oder Beschichtungen beeinflussen beziehungsweise verbessern, beispielsweise mehrere der oben genannten Eigenschaften. Dies bedeutet, dass die PHA beispielsweise auch als Additive mit mehreren Funktionen verwendet werden können.
Bei den erfindungsgemäß als Additive, insbesondere als Mattierungsmittel zu verwendenden PHA handelt es sich um eine Klasse natürlich auftretender Polyester, die bekanntermaßen von unterschiedlichen Bakterien aufgebaut werden können und durch dem Fachmann geläufige Verfahren isoliert beziehungsweise aufgereinigt werden können.
Die industrielle Produktion von PHA erfolgt in der Regel durch Fermentation mit Hilfe rekombinanter Bakterienkulturen. Ebenfalls beschrieben ist die Produktion durch gentechnisch veränderte Pflanzen oder durch anaerobe Gärung biologischer Abfälle. Ergänzend sei hierbei auf "Polyhydroxyalkanoates: an overview; Bioresource Technology 87 (2003) 137-146" verwiesen. Nach Beendigung des Fermentationsprozesses zur Herstellung der PHA, muss das Produkt von der zellulären Biomasse der eingesetzten Bakterienkulturen abgetrennt werden. Entsprechende Isolierungsverfahren beziehungsweise Aufreinigungsverfahren werden beispielsweise in "Chemistry and Technology of Biodegradable Polymers, G. J. L. Griffin, Springer; 1. Edition (Dezember 31, 1993), ISBN-10: 0751400033" beschrieben. Nach der Aufreinigung werden die Polyhydroxyalkanoate in der Regel als bei Raumtemperatur, das heißt im Bereich von etwa 10°C bis 40°C, pulverförmiges Material beziehungsweise Pulver erhalten. Als Pulver ist bekanntermaßen ein feines, zerteiltes Gemenge fester Stoffe zu verstehen.

Die erfindungsgemäß zu verwendenden PHA basieren auf Hydroxycarbonsäuren als Monomerbausteinen, die zu Polyestern polymerisiert sind. Bei diesen Monomeren beziehungsweise Hydroxycarbonsäuren handelt es sich insbesondere um 2-Hydroxycarbonsäuren bis 6-Hydroxycarbonsäuren. Dies heißt beispielsweise, dass bevorzugt die Hydroxygruppe mindestens in β-Position zur Carboxygruppe des Monomers steht. Die Hydroxycarbonsäuren können zudem noch unterschiedlich substituiert sein. Als Substituenten können beispielsweise, aber nicht ausschließlich, Alkyl-, verschieden funktionalisierte Alkyl, Aryl-, Alkenyl-, Halogen-, Cyano-, Epoxy-, Ether-, Acyl-, Ester- und Carboxygruppen sowie Kombinationen solcher Gruppen vorhanden sein. Bevorzugt sind solche Monomere enthalten, bei denen die PHA mindestens eine Art der folgenden Strukturen als Struktureinheit beziehungsweise Monomereinheit umfassen: 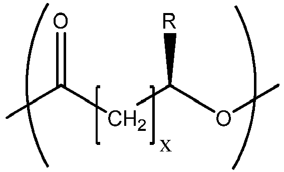 mit:
x = 1, 2, 3 oder 4, insbesondere 1 oder 2, besonders bevorzugt 1,
R = H, Alkyl, Aryl, Alkenyl, Aralkyl, Halogenalkyl, Halogen, Cyano oder Epoxygruppen-, Ethergruppen-, Acylgruppen-, Estergruppen- und/oder Carboxygruppen-haltiger Rest, insbesondere H oder Alkyl, wenn Alkyl dann vorzugsweise Methyl oder Ethyl, bevorzugt Methyl.

Der Ausdruck Struktureinheit beziehungsweise Monomereinheit bedeutet, dass in der Regel mehrere gleiche oder verschiedene Monomeren, im Rahmen der vorliegenden Erfindung Hydroxycarbonsäuren, chemisch hintereinander verknüpft sind. Im Rahmen der vorliegenden Erfindung handelt es sich bei der chemischen Verknüpfung um Esterbindungen. Eine Monomereinheit ist also eine von einem Monomer abgeleitete Einheit in einer Polymerkette, die mit mehreren weiteren, aus dem gleichen oder aus verschiedenen Monomeren abgeleiteten Einheiten in kettenförmiger Verknüpfung in der Polymerkette vorliegt.
Im Rahmen der vorliegenden Erfindung bevorzugt verwendete PHA enthalten ein oder mehrere Blöcke, die jeweils aufgebaut sind aus sich wiederholenden Struktureinheiten des gleichen Monomers, wobei das jeweilige Monomer ausgewählt wird aus der Gruppe bestehend aus 3-Hydroxybutansäure, 4-Hydroxybutansäure, 3-Hydroxyvaleriansäure, 3-Hydroxyhexansäure und/oder 3-Hydroxyoctansäure. Erfindungsgemäß besonders bevorzugt werden PHA eingesetzt, die mindestens eine der folgenden polymeren und/oder copolymeren Strukturen enthalten: Poly-3-hydroxybutyrat (P-3HB), Poly-3-hydroxybutyrat-co-3-hydroxyvalerianat (P-3HB-3HV), Poly-3-hydroxybutyrat-co-4-hydroxy-butyrat (P-3HB-4HB), und Poly-3-hydroxybutyrat-co-3-hydroxyvalerianat-co-4-hydroxybutyrat (P-3HB-3HV-4HB). In einer besonders bevorzugten Ausführungsform der Erfindung werden PHA verwendet, die aus einem oder mehreren, vorzugsweise einem, der vorgenannten Polymeren und Copolymeren bestehen.

Die Molekulargewichte der im Rahmen der vorliegenden Erfindung zu verwendenden PHA können sehr breit variieren. So liegen die massenmittleren Molekulargewichte (M_{W}) der PHA beispielsweise im Bereich von 5.000 bis 2.000.000 g/mol (gemessen mittels Gelpermeationschromatographie (GPC)). Bevorzugt liegen die massenmittleren Molekulargewichte (M_{W}) der PHA im Bereich von 80.000 bis 300.000 g/mol (gemessen mittels GPC).
Wie oben bereits angegeben, werden die PHA in der Regel nach der Aufreinigung als Pulver erhalten und werden in dieser Form als Pulver erfindungsgemäß verwendet.
Auf diese Weise sind sie beispielsweise von verschiedenen Anbietern erhältlich (zum Beispiel Biomer/ Deutschland, Tianan Biologic Material Co./China, Tianjin Green Bioscience Co./China). Im Rahmen der vorliegenden Erfindung handelt es sich um Partikel. In einer besonders bevorzugten Ausführungsform werden die PHA in Form von Partikel, die sich aus agglomerierten kleineren Primärpartikeln zusammensetzen, verwendet, die nach Wunsch gemahlen oder mikronisiert werden können. Auf diese Weise können die Partikel beziehungsweise das Pulver, falls gewünscht, weiter zerkleinert werden und es wird gegebenenfalls eine spezifischere, engere Partikelgrößenverteilung erreicht. Dabei werden gängige Mahlverfahren, beispielsweise das Mahlen unter Einsatz von Strahlmühlen, Perlmühlen, Spiralstrahlmühlen und ähnlichen Mühlen, eingesetzt. Vorzugsweise werden die PHA unter Einsatz einer Strahlmühle mikronisiert, wodurch die PHA-Partikel hergestellt werden.

Die PHA-Partikel besitzen eine bestimmte Partikelgröße. Die Partikelgröße wird im Rahmen der vorliegenden Erfindung durch einen Parameter d₅₀ angegeben. Dieser Parameter bedeutet, dass 50 Gew.-% der Partikel eine Partikelgröße besitzen, die kleiner als oder gleich dem angegebenen d₅₀-Wert ist. Die PHA-Partikel besitzen eine Partikelgröße von d₅₀ = 0,5 µm bis d₅₀ = 15 µm und insbesondere von d₅₀ = 1 µm bis d₅₀ = 7 µm. Unter Partikelgröße ist der Durchmesser der jeweils als kugelförmig angenommenen Teilchen zu verstehen (Durchmesser-Approximation).

Die Partikelgrößenbestimmung erfolgt im Rahmen der vorliegenden Erfindung mittels Laserbeugung, einer dem Fachmann geläufige Methode. Partikel, die einen gebündelten Lichtstrahl, beispielsweise einen Laserstrahl, passieren, streuen das Licht. Der Winkel, indem das Licht gestreut wird, steht in direktem Zusammenhang mit der Größe der Teilchen beziehungsweise mit ihrem Durchmesser. Für detaillierte Informationen über die Messmethode sei auf die anfolgenden Beispiele verwiesen.

Die PHA werden im Rahmen der erfindungsgemäßen Verwendung in einer Beschichtungszusammensetzung mit einem Anteil von 0,01 bis 20 Gew.-%, bevorzugt 0,5 bis 10 Gew.-%, insbesondere 1 bis 8 Gew.-%, jeweils bezogen auf die Gesamtmenge der Beschichtungszusammensetzung, eingesetzt. Dabei handelt es sich entweder um nur ein PHA oder um eine Mischung mehrerer verschiedener PHA. Vorzugsweise wird genau ein PHA eingesetzt.
Die PHA können auch mit anderen Mattierungsmitteln, beispielsweise den oben beschriebenen Mattierungsmitteln, in Kombination verwendet werden.

Im Rahmen der erfindungsgemäßen Verwendung können an sich beliebige Beschichtungszusammensetzungen zum Einsatz kommen. Unterschiedliche Beschichtungszusammensetzungen beziehungsweise deren Bestandteile werden beispielsweise beschrieben in "Lackrohstoff-Tabellen, E. Karsten/O.Lückert, Vincentz 2000 ISBN 3878705611" und "Pigment- und Füllstoff-Tabellen, O. Lückert, Vincentz 2002 ISBN 9783878707448". In jedem Fall enthält die Beschichtungszusammensetzung im Rahmen der erfindungsgemäßen Verwendung mindestens ein typisches polymeres Harz als Bindemittel sowie gegebenenfalls ein typisches organisches Lösemittel und/oder Wasser sowie gegebenenfalls weitere typische Lackadditive. Auf welche Weise und in welchen Mengen entsprechende Bestandteile von Beschichtungszusammensetzungen auszuwählen sind, ist dem Fachmann auf dem Gebiet bekannt. Eine entsprechende Auswahl kann der Fachmann in jedem Fall je nach den Anforderungen des jeweiligen Einzelfalls auf Basis seines Fachwissens treffen.
Polymere Harze als Bindemittel sind beispielsweise, aber nicht ausschließlich, die an sich bekannten Polyurethan-, Polyester-, Polyesterpolyol-, Acryl- (wie Polyacrylat- und Polymethacrylat-), Polyesteracrylat-, Epoxiacrylat-, Polyetheracrylat-, Urethanacrylat-, Epoxid-, und/oder Alkydharze. Ergänzend sei hierbei auf Römpp-Lexikon Lacke und Druckfarben, Georg Thieme Verlag, Stuttgart, New York, 1998, Seiten 73 - 74 verwiesen. Die polymeren Harze sind selbst- oder fremdvernetzend. Dies heißt bekanntermaßen, dass die vernetzenden funktionellen Gruppen der Harze in ein und demselben Harz oder in verschiedenen organischen Verbindungen vorliegen können. Bei fremdvernetzenden Systemen können beispielsweise noch Aminoplastharze sowie monomere und/oder polymere blockierte und/oder freie Polyisocyanate als Vernetzungsmittel enthalten sein, insbesondere Polyisocyanate, die dann beispielsweise mit Hydroxygruppen eines polymeren Harzes reagieren können, sodass ein Film gebildet wird. In einem bevorzugten fremdvernetzenden System wird mindestens ein hydroxyfunktionelles polymeres Harz als Bindemittel, insbesondere ein hydroxyfunktioneller Polyester, mit mindestens einem Polyisocyanat als Vernetzungsmittel kombiniert.

Insbesondere werden im Rahmen der erfindungsgemäßen Verwendung Acryl-, Polyesteracrylat-, und/oder Polyesterpolyolharze als Bindemittel eingesetzt. In besonders bevorzugten Ausführungsformen wird im Falle von wasserbasierenden Beschichtungszusammensetzungen ein Acrylharz, in lösemittelbasierenden Beschichtungszusammensetzungen eine Kombination aus einem hydroxyfunktionellen Polyester mit mindestens einem Polyisocyanat und in lösemittelfreien, rein auf Reaktivverdünnern basierenden Beschichtungszusammensetzungen, die im Rahmen der vorliegenden Erfindung vorteilhafter Weise strahlenhärtend sind, ein Polyesteracrylatharz eingesetzt. Die im Rahmen der vorliegenden Erfindung geltenden Definitionen der vorstehend gewählten Begriffe wie beispielsweise "lösemittelbasierend" sind weiter unten zu finden.

Der Gesamtanteil der polymeren Harze als Bindemittel und der gegebenenfalls vorhandenen organischen Verbindungen als Vernetzungsmittel an den Beschichtungszusammensetzungen liegt im Bereich von 10 bis 90 Gew.-%, vorzugsweise von 15 bis 80 Gew.-%, besonders vorteilhaft zwischen 25 und 60 Gew.-%, jeweils bezogen auf die Gesamtmenge der Beschichtungszusammensetzung.

Die Beschichtungszusammensetzung ist chemisch härtbar und/oder strahlenhärtend, beispielsweise je nach Art der eingesetzten polymeren Harze und gegebenenfalls Vernetzer (vgl. hierzu beispielsweise Römpp-Lexikon Lacke und Druckfarben, Georg Thieme Verlag, Stuttgart, New York, 1998, Seiten 274 bis 276 sowie Seite 542 bis 544). Es kann sich bei der Beschichtungszusammensetzung um ein Ein-, Zwei- oder Mehrkomponentensystem handeln. Der Fachmann weiß je nach den im Einzelfall bestehenden Anforderungen aus den genannten Möglichkeiten auszuwählen.

Die Beschichtungszusammensetzung enthält gegebenenfalls ein Lösemittel. Als Lösemittel kommen die typischen, dem Fachmann bekannten organischen Lösemittel, beispielsweise, aber nicht ausschließlich, aliphatische, cycloaliphatische, aromatische Lösemittel, typische Ether, Ester und/oder Ketone wie beispielsweise Butylglykol, Butyldiglykol, Butylacetat, Methylisobutylketon, Methylethylketon zum Einsatz. Ebenfalls als Lösemittel kommt Wasser zum Einsatz. Die Beschichtungszusammensetzung kann beispielsweise wasserbasierend oder lösemittelbasierend sein. Im Rahmen der vorliegenden Erfindung ist unter wasserbasierend zu verstehen, dass die Beschichtungszusammensetzung als Lösemittel hauptsächlich Wasser enthält. Insbesondere sind bei einer wasserbasierenden Beschichtungszusammensetzung nicht mehr als 20 Gew.-%, insbesondere nicht mehr als 10 Gew.-%, organischer Lösemittel, bezogen auf die Gesamtmenge an Lösemitteln, in der Beschichtungszusammensetzung enthalten. Als lösemittelbasierend gilt im Rahmen der vorliegenden Erfindung eine Beschichtungszusammensetzung, die nicht mehr als 10 Gew.-%, bevorzugt nicht mehr als 5 Gew.-%, insbesondere bevorzugt nicht mehr als 2 Gew.-% Wasser, bezogen auf die Gesamtmenge an Lösemitteln enthält. Natürlich kann die Beschichtungszusammensetzung auch im Vergleich zu den oben angegebenen Anteilen, die den wasserbasierenden oder lösemittelbasierenden Charakter begründen, ausgewogenere Anteile beziehungsweise Verhältnisse von organischen Lösemitteln und Wasser enthalten.

Der Anteil an Lösemittel an der Beschichtungszusammensetzung kann beispielsweise im Bereich von 0-84,99 Gew.-%, bezogen auf die Gesamtmenge der Beschichtungszusammensetzung, liegen.

Die Beschichtungszusammensetzung enthält gegebenenfalls anstelle des Lösemittels oder zusätzlich zum Lösemittel einen Reaktivverdünner. Als Reaktivverdünner kommen die typischen, dem Fachmann bekannten, im allgemeinen niedrigviskosen Verbindungen, die verdünnend auf die Beschichtungszusammensetzung wirken und durch chemische Reaktion im Film verbleiben, zum Einsatz. Beispielsweise können die dem Fachmann bekannten Mono-, Di-, und/oder Triacrylate als Reaktivverdünner in beispielsweise strahlenhärtenden Systemen zum Einsatz kommen, wie beispielsweise Dipropylenglykoldiacrylat. Ergänzend sei hierzu auf Römpp-Lexikon Lacke und Druckfarben, Georg Thieme Verlag, Stuttgart, New York, 1998, Seite 491 verwiesen.

Bei der Beschichtungszusammensetzung kann es sich beispielsweise auch um einen Pulverlack handeln. Pulverlacke sind organische, meist duroplastische Beschichtungspulver mit einem Festkörperanteil von 100 %. Das Beschichten mit Pulverlacken erfordert keine Lösemittel.

Es ist von besonderem Vorteil, dass im Rahmen der erfindungsgemäßen Verwendung sowohl wasserbasierende und lösemittelbasierende als auch lösemittelfreie Beschichtungszusammensetzungen, wie beispielsweise Pulverlacke oder auf Reaktivverdünnern basierende Beschichtungszusammensetzungen, zum Einsatz kommen können. Die Breitenanwendbarkeit der erfindungsgemäßen Verwendung ist demnach sehr groß.

Zudem kann die im Rahmen der vorliegenden Verwendung einzusetzende Beschichtungszusammensetzung noch Pigmente oder Füllstoffe enthalten. Die Auswahl solcher Pigmente oder Füllstoffe kann vom Fachmann je nach den Anforderungen des Einzelfalls ausgewählt werden. Ergänzend sei auf beispielsweise auf Römpp-Lexikon Lacke und Druckfarben, Georg Thieme Verlag, Stuttgart, New York, 1998, Seiten 250 bis 252 sowie 451 bis 453 verwiesen).

Vorzugsweise allerdings sind die einzusetzenden Beschichtungszusammensetzungen im Wesentlichen frei von Pigmenten und Füllstoffen. Es handelt sich bei den einzusetzenden Beschichtungszusammensetzungen insbesondere um Klarlacke.
Zudem kann die im Rahmen der vorliegenden Verwendung einzusetzende Beschichtungszusammensetzung noch unterschiedliche Lackadditive enthalten. Solche Lackadditive sind dem Fachmann bekannt und können von diesem nach den Anforderungen des Einzelfalls auf Basis seines Fachwissens ausgewählt werden. Zum Einsatz können beispielsweise, aber nicht ausschließlich, kommen Photoinitiatoren, Entschäumer, Netzmittel, filmbildende Hilfsmittel wie CelluloseDerivate (beispielsweise Cellulosenitrat und Celluloseacetat), Verlaufmittel, Dispergiermittel, und/oder rheologiesteuernde Additive.

Weiterhin ist eine Beschichtungszusammensetzung enthaltend PHA gemäß Anspruch 10 Gegenstand der vorliegenden Erfindung. Die erfindungsgemäße chemisch härtbare und/oder strahlenhärtende Beschichtungszusammensetzung enthält somit 0,01-20 Gew.-% Polyhydroxyalkanoate, jeweils bezogen auf die Gesamtmenge der Beschichtungszusammensetzung, und mindestens ein selbst- oder fremdvernetzendes polymeres Harz als Bindemittel ausgewählt aus der Gruppe der Polyurethan-, Polyester-, Polyesterpolyol-, Acryl-, Polyacrylat-, Polymethacrylat-, Polyesteracrylat-, Epoxid-, und/oder Alkydharze und gegebenenfalls mindestens ein Vernetzungsmittel in einem Gesamtanteil von 15 bis 99,5 Gew.-% und mindestens ein Lösemittel in einem Anteil von 0 bis 84,99 Gew.-%, jeweils bezogen auf die Gesamtmenge der Beschichtungszusammensetzung. Die im Rahmen der erfindungsgemäßen Verwendung weiter oben beschriebenen Ausführungsformen und bevorzugten Ausführungsformen hinsichtlich der einzusetzenden PHA und der Beschichtungszusammensetzungen gelten entsprechend auch für die erfindungsgemäße Beschichtungszusammensetzung enthaltend PHA.

Die Herstellung der erfindungsgemäßen Beschichtungszusammensetzung erfolgt über die dem Fachmann geläufigen Verfahren und weist keine Besonderheiten auf. Es kommen die bekannten Methoden zum Einsatz, wie beispielsweise die schrittweise Zugabe unter Rühren und Vermischung der Bestandteile der Beschichtungszusammensetzung in üblichen und bekannten Mischaggregaten wie Rührkessel oder Dissolver.

Ebenfalls Gegenstand der vorliegenden Erfindung ist eine Beschichtung gemäß Anspruch 14, die mit der erfindungsgemäßen Beschichtungszusammensetzung hergestellt wurde.

Die Herstellung der Beschichtung erfolgt durch Applikation der erfindungsgemäßen Beschichtungszusammensetzung auf ein Substrat und anschließende Härtung der applizierten Beschichtungszusammensetzung.

Auch die Herstellung der Beschichtung erfolgt über die dem Fachmann geläufigen Applikationstechniken auf ein Substrat und anschließende Härtungsverfahren.
Die Applikation erfolgt beispielsweise, aber nicht ausschließlich, durch die bekannten Spritz-, Sprüh-, Streich-, Roll-, Gieß-, Tränk- und/oder Tauchverfahren.

Nach der Applikation der Beschichtungszusammensetzung auf ein Substrat erfolgt die Härtung nach gängigen Methoden. Beispielsweise kann die applizierte Beschichtungszusammensetzung physikalisch trocknend, thermisch und/oder unter Anwendung aktinischer Strahlung (strahlenhärtend), vorzugsweise UV-Strahlung sowie Elektronenstrahlung härtbar sein. Die thermische Härtung kann beispielsweise im Bereich von etwa 10°C bis etwa 250 °C, je nach Art der Beschichtungszusammensetzung und/oder des Substrats, erfolgen. Auch die Dauer der Härtung ist individuell beispielsweise von der Art des Härtungsverfahrens (thermisch oder aktinisch), der Art der eingesetzten Beschichtungszusammensetzung und/oder den Substraten abhängig. Beispielsweise kann die Härtung zwischen 1 Minute und mehreren Stunden oder sogar Tagen, beispielsweise bis zu 10 Tagen, andauern. Dabei kann das Substrat bewegt werden oder auch ruhen. Die Härtungsbedingungen können vom Fachmann problemlos auf Basis seines Fachwissens je nach Einzelfall angepasst werden.

Die Schichtdicken betragen 3 µm bis 5 mm, vorzugsweise 10 µm bis 2 mm. Auch hier kommt es jeweils auf die im Einzelfall vorliegenden Bedingungen sowie den individuellen Anwendungsbereich an.

Als Substrate können im Rahmen der vorliegenden Erfindung jegliche vorstellbare Substrate für Beschichtungszusammensetzungen zu Einsatz kommen. Insbesondere aber nicht ausschließlich, werden die erfindungsgemäßen Beschichtungen auf Metall, Glas, Kunststoffe, Holz, Leder, Kunstleder, Keramiken, Papier, Textilien in verschiedenen Ausführungen und Formen aufgebracht.

Die erfindungsgemäße Beschichtung kann eine Einschichtbeschichtung oder eine Mehrschichtbeschichtung sein. Im Falle einer Mehrschichtbeschichtung können die Beschichtungszusammensetzung, mit der die einzelnen Schichten der erfindungsgemäßen Beschichtung hergestellt wird, gleich oder verschieden sein.

Erfindungswesentlich ist jedoch, dass zumindest eine der eingesetzten Beschichtungszusammensetzungen eine erfindungsgemäße Beschichtungszusammensetzung ist, das heißt also PHA enthält.

Durch die erfindungsgemäße Verwendung gelingt es, eine ausgezeichnete Mattierungseffizienz von Beschichtungszusammensetzungen beziehungsweise einen hervorragenden Mattierungsgrad von Beschichtungen zu erreichen. Die deutliche Glanzerniedrigung geht einher mit weiteren hervorragenden Eigenschaften wie einer nur geringfügigen Viskositätserhöhung, einem guten Verlauf, einer hohen Kratzfestigkeit, Transparenz und einer guten Blockfestigkeit sowie einer wünschenswerten Haptik. Es wird ein hervorragende Balance der vorgenannten Eigenschaften erzielt. Zudem sind die erfindungsgemäß zu verwendenden PHA gut bioabbaubar und damit umweltfreundlicher als beispielsweise Mattierungsmittel auf Basis petrochemischer Rohstoffe. Augenscheinlich gelten die beschriebenen vorteilhaften Eigenschaften ebenfalls für die erfindungsgemäße Beschichtungszusammensetzung und die erfindungsgemäße Beschichtung.

Anfolgend wird die Erfindung anhand von Beispielen näher beschrieben.

### Beispiele

### A)

Es wurden PHA von unterschiedlichen Anbietern mittels Strahlmühle unterschiedlich intensiv mikronisiert, wodurch PHA-Partikel hergestellt werden. Dabei wurden Partikel mit unterschiedlicher Partikelgrößenverteilung erhalten. Die Partikelgrößen beziehungsweise die Größenverteilungen wurden durch Laserbeugung mittels eines Sympatec HELOS/BF-Messsystems, ausgerüstet mit einem Sympatec RODOS dry - Dispergiersystem, bei 23 °C gemessen.
Tabelle 1 fasst die entsprechenden Daten der mikronisierten PHA-Partikel zusammen. Die PHA-Partikel wurden in unterschiedlichen Beschichtungszusammensetzungen, basierend auf drei unterschiedlichen Beschichtungssystemen, als Additive beziehungsweise Mattierungsmittel eingesetzt (vergleiche C)).

**Tabelle 1: Mikronisierte PHA Partikel**

| | | | **Partikelgrößenverteilung** | | |
|---|---|---|---|---|---|
| **Nr** | **Anbieter** | **PHB¹** | **D₁₀** | **D₅₀** | **D₉₉** |
| Beispiel 1 | Biomer (Deutschland) | P-3HB | 1,04 | 3,86 | 13,9 |
| Beispiel 2 | Biomer (Deutschland) | P-3HB | 1,07 | 3,64 | 14,8 |
| Beispiel 3 | Biomer (Deutschland) | P-3HB | 1,28 | 6,17 | 31,6 |
| Beispiel 4 | Tianan Biologic Material Co. (China) | P-3HB-3HV | 1,24 | 4,85 | 22,2 |
| Beispiel 5 | Tianjin Green Bioscience Co., Ltd. (China) | P-3HB-4HB | 1,36 | 5,08 | 17,1 |

| | | | | | |
|---|---|---|---|---|---|
| ¹ Erfindungsgemäß zu verwendende PHB P-3HB = Poly(3-hydroxybutyrat) P-3HB-3HV = Poly(3-hydroxybutyrat-*co*-3-hydroxyvalerianat) P-3HB-4HB = Poly(hydroxybutyrat-*co*-4-hydroxy-butyrat) | | | | | |

Neben den PHB gemäß Tabelle 1 kamen zudem typische, auf Siliciumdioxid basierende kommerziell erhältliche Mattierungsmittel in Beschichtungszusammensetzungen zum Einsatz (vergleiche ebenfalls unter C)). Ebenfalls eingesetzt wurden kommerziell erhältliche Wachse als Mattierungsmittel (vergleiche ebenfalls C)). Die Tabellen 2 und 3 fassen die entsprechenden Daten der eingesetzten herkömmlichen Mattierungsmittel zusammen.

**Tabelle 2: Typische auf Siliciumdioxid basierende Mattierungsmittel**

| **Name** | **Anbieter** | **Beschreibung** |
|---|---|---|
| Acematt TS 100 ¹ | Evonik Industries | Nicht modifiziert |
| Acematt OK 412 ² | Evonik Industries | organisch modifiziert |
| Syloid ED 30 ³ | W. R. Grace & Co. | organisch modifiziert (10% Wachs) |
| Syloid ED 40 ³ | W. R. Grace & Co. | organisch modifiziert (10% Wachs) |
| Syloid RAD 2105 ³ | W. R. Grace & Co. | organisch modifiziert (20% spezielle organische Modifizierung) |
| Sylysia 256 NF ³ | Sylisiamont S.p.A. | organisch modifiziert |

| | | |
|---|---|---|
| ¹ Hergestellt auf Basis von pyrolytischem Siliciumdioxid ² Hergestellt durch Fällung ³ Hergestellt durch Gelierung | | |

**Tabelle 3: Typische Wachs-Mattierungsmittel**

| **Name** | **Beschreibung** |
|---|---|
| AQUAMAT 270 | Nicht-ionische Dispersion eines modifizierten Polyethylen-Wachses |
| AQUACER 539 | Nicht-ionische Emulsion eines modifizierten Paraffin-Wachses |
| CERAFLOUR 920 | Mikronisiertes organisches Polymer |
| CERAFLOUR 928 | Mikronisiertes modifiziertes Polyethylen-Wachs |
| CERAFLOUR 988 | Mikronisiertes Amid-modifiziertes Polyethylen-Wachs |
| CERAFLOUR 994 | Ultrafeines, mikronisierter Amidewachs |
| CERAFLOUR 996 | Mikronisiertes Polyethylen-modifiziertes Polytetrafluorethylene-Wachs |

### B)

Unter Verwendung der unter A) angegebenen Mattierungsmittel wurden unterschiedliche Beschichtungszusammensetzungen hergestellt. Mit Hilfe dieser Beschichtungszusammensetzungen wurden Beschichtungen auf unterschiedlichen Substraten hergestellt (vergleiche C)).
Es wurden unterschiedliche Eigenschaften der Beschichtungszusammensetzungen sowie Beschichtungen untersucht. Die untersuchten Eigenschaften sowie die dazu gehörigen Analyseverfahren sind in der Folge beschrieben:
Der Verlauf, die Kraterbildung, die Schaumbildung und die Transparenz der (applizierten und gehärteten) Beschichtungen wurden visuell auf Kontrastkarten und/oder Glasplatten beurteilt. (Noten 1 bis 5, 1 = sehr gut, 5 = mangelhaft, bei der Transparenz: 5 = sehr gering). Ebenfalls visuell beurteilt wurden das Erscheinungsbild, beziehungsweise die Homogenität der Beschichtungszusammensetzung.

Die haptischen Eigenschaften der Beschichtungen wurden ebenfalls untersucht. Dabei wurden die Beschichtungen auf den entsprechenden Substraten von sechs Personen befühlt und nach folgender Bewertung beurteilt: Noten 1 bis 5, 1 = fühlt sich sehr angenehm, samtig an, 5 = fühlt sich unangenehm, rau an.

Der Glanz der Beschichtungen wurde auf Kontrastkarten mit einem Glanzmessgerät Micro-TRI-Gloss *µ* von Byk-Gardner (60° Geometrie) vermessen. Hohe Werte entsprechen einem hohen Glanz.

Der Glanzschleier und die Bildschärfe der Beschichtungen wurden auf Polyesterfolien (Melinex O) mit einem Messgerät haze-gard *plus* (Byk-Gardner) gemessen.
Der Glanzschleier beruht auf diffuser Lichtreflexion an der Oberfläche in von der Hauptreflexionsrichtung des einfallenden Lichtstrahls abweichenden Winkeln, wodurch die betrachtete Oberfläche einen milchig trüben Schleier erhält. In ASTM D 1003 wird der Glanzschleier als der prozentuale Lichtanteil definiert, der in von mehr als 2,5 ° vom einfallenden Licht von der Hauptreflexionsrichtung abweichenden Winkeln reflektiert wird.
Die Bildschärfe (oder Durchsichtschärfe) ist abhängig vom Licht, dass in vergleichsweise hoher Intensität in sehr kleinen von der Hauptreflexionsebene abweichenden Winkeln gestreut wird. Der Effekt beschreibt, wie genau feine Details durch die jeweilige Probe hindurch gesehen werden können. Die Bildschärfe wird in von weniger als 2,5 ° von der Hauptreflexionsebene abweichenden Winkeln gemessen (Byk-Gardner Katalog 2007-2008).
Für die mit dem Messgerät haze-gard *plus* getrennt voneinander ermittelten Werte für den Glanzschleier und die Bildschärfe gilt jeweils, dass hohe Werte einem hohen Glanzschleier beziehungsweise einer hohen Bildschärfe entsprechen.

Die Blockfestigkeit von Beschichtungen wurde auf Kontrasttafeln bestimmt. Dazu wurden die beschichteten Kontrasttafeln (Teststreifen von 5 x 10 cm Flächengröße) in der Mitte geknickt und die beschichteten Knickflächen zusammengedrückt (1 h, 60°C, Belastungsgewicht 1 kg). Eine gute Blockfestigkeit liegt vor, wenn die zusammengedrückten Flächen einfach und ohne Beschädigung der Beschichtung wieder voneinander getrennt werden können. Wiederum wurde ein Notensystem von 1 bis 5 zugrunde gelegt (vergleiche oben).

Die Viskosität der Beschichtungszusammensetzungen wurde bei einer Temperatur von 23°C unter Verwendung eines Rheometer StressTech - Messgeräts (Reologica) bei einer Scherrate von 10 1/s gemessen.

Der Reibungskoeffizient (Coefficient of Friction, COF) der Beschichtungen wurde bei 23°C auf Glasplatten mit einem Altek Model 9505 AE (0,5 kg Gewichtsbelastung) unter jeweils konstanten Bedingungen gemessen.

Niedrige Werte entsprechen einer glatt anzufühlenden Oberfläche (vergleiche hierzu auch "Kittel, Lehrbuch der Lacke und Beschichtungen, Analyse und Prüfungen, Band 10, S. Hirzel Verlag Stuttgart, 2006, Seite 568 bis 569").

Die Messung der Kratzfestigkeit erfolgte mittels SATRA - Abriebtest auf Kontrastkarten. Angegeben ist die Anzahl von Reibzyklen unter Verwendung eines Filzplättchens, bis erste Kratzspuren sichtbar wurden. Zudem wurde der Glanz vor und nach dem Test gemessen (60 ° Geometrie, vergleiche oben).

### C)

Herstellung von Beschichtungszusammensetzungen und Beschichtungen sowie deren Untersuchung

Alle im Folgenden beschriebenen Präparationen und Untersuchungen wurden bei 25°C durchgeführt.

### C1) Beschichtungssystem 1

Es wurden Beschichtungszusammensetzungen und Beschichtungen auf Basis des Beschichtungssystems 1 (vergleiche Tabelle 4) hergestellt.

**Tabelle 4: Beschichtungssystem 1), strahlenhärtendes, Reaktivverdünner-basierendes Beschichtungssystem**

| **Bestandteil** | **Menge** (in Gew.-%, bezogen auf Gesamtformulierung) |
|---|---|
| Laromer PE 56 F | 50,6 |
| Laromer DPGDA | 44,6 |
| BYK-UV 3570 | 0,1 |
| BYK-1790 | 0,2 |
| Irgacure 500 | 4,2 |

| | |
|---|---|
| Laromer PE 56 F: Ungesättigtes Polyesteracrylatharz Laromer DPGDA (Dipropylenglykoldiacrylat, Acrylsäureester als Reaktivverdünner (BASF)) BYK-UV 3570: Polyester modifiziertes acryl-funktionelles Polydimethylsiloxan als reaktives Verlaufadditiv BYK-1790: Silikonfreier Antischaumbildner Irgacure 500: Mischung von zwei Photoinitiatoren (BASF) | |

Die Bestandteile des Beschichtungssystems 1 wurden schrittweise in der oben angegebenen Reihenfolge unter Rühren in einem Dissolver vermischt. Danach wurden unterschiedliche der unter A) angegebenen Mattierungsmittel beigefügt und für 10 Minuten unter Rühren dispergiert. Die eingesetzten Mattierungsmittel sowie deren Gewichtsanteile (Gew.-%), jeweils bezogen auf das Gesamtgewicht der jeweiligen Formulierung, sind Tabelle 5 zu entnehmen.
Die so hergestellten Beschichtungszusammensetzungen wurden mit einem 25 µm Spiralrakel auf Kontrastkarten und mit einem 25 µm Kastenrakel auf Glasplatten aufgetragen.
Anschließend erfolgte die Härtung der applizierten Beschichtungszusammensetzungen mittels UV-Strahlung (UV Härtungssystem IST, Bandgeschwindigkeit 5 m/min, Quecksilberlampe, 120 W/cm).
Tabelle 5 fasst unterschiedliche ermittelte Eigenschaften beziehungsweise Testergebnisse der hergestellten Beschichtungszusammensetzungen und Beschichtungen zusammen.

**Tabelle 5: Eigenschaften von Beschichtungszusammensetzungen und Beschichtungen, basierend auf dem Beschichtungssystem 1**

| **Additiv** | **Erscheinungsbild/ Homogenität** | **Krater** | **Transparenz** | **COF** | **Haptik** | **Glanz, 60°** |
|---|---|---|---|---|---|---|
| Kontrolle (ohne Mattierungsmittel) | ok | 4 | 1 | 0,40 | 5 | 91 |
| 5% Acematt OK412 | Sedimentation | 1 | 4 | 0,52 | 2 | 54 |
| 5% Syloid ED 30 | Sedimentation | 1 | 3 | 0,52 | 2 | 49 |
| 5% Acematt TS 100 | ok | 2 | 1-2 | 0,46 | 3 | 41 |
| 5% CERAFLOUR 994 | aufrahmend | 1 | 5 | 0,44 | 3 | 31 |
| 5% CERAFLOUR 920 | ok | 4 | 4-5 | 0,42 | 3 | 55 |
| 5% Beispiel 1 | ok | 1-2 | 2 | 0,40 | 1-2 | 30 |
| 5% Beispiel 2 | ok | 1 | 2 | 0,42 | 1 | 34 |
| 5% Beispiel 3 | ok | 2 | 2-3 | 0,46 | 1-2 | 40 |
| 5% Beispiel 4 | ok | 1-2 | 2 | 0,44 | 1 | 38 |
| 5% Beispiel 5 | ok | 1-2 | 4 | 0,39 | 2-3 | 39 |
| 2,5% Acematt TS 100 | ok | 2-3 | 2 | 0,40 | 2 | 35 |
| 2,5% Beispiel 1 | | | | | | |
| 2,5% CERAFLOUR 994 | aufrahmend, Sedimentation | 1 | 4 | 0,50 | 3 | 33 |
| 2,5% Beispiel 1 | | | | | | |

Die erfindungsgemäßen Beschichtungszusammensetzungen enthaltend PHA weisen eine homogenes Erscheinungsbild ohne Sedimentation oder Aufrahmung auf. Auch die Eigenschaften der erfindungsgemäßen Beschichtungen, insbesondere der Mattierungseffizienz, sind ähnlich oder sogar besser als die Eigenschaften von herkömmlichen Beschichtungen. Insgesamt zeigt sich bei den erfindungsgemäßen Beschichtungszusammensetzungen und Beschichtungen eine hervorragende Balance unterschiedlicher Eigenschaften, die zum Teil deutlich besser ist als bei herkömmlichen Beschichtungszusammensetzungen und Beschichtungen.

Zudem wurde der Einfluss der verwendeten Mattierungsmittel auf die Viskosität der Beschichtungszusammensetzungen ermittelt (Tabelle 6). Die eingesetzten Mattierungsmittel sowie deren Gewichtsanteile (Gew.-%), jeweils bezogen auf das Gesamtgewicht der jeweiligen Formulierung, sind ebenfalls angegeben.

**Tabelle 6: Einfluss von Mattierungsmitteln auf die Viskosität von Beschichtungszusammensetzung basierend auf Beschichtungssystem 1**

| **Additiv** | **Viskosität [mPa*s]** |
|---|---|
| Kontrolle (ohne Mattierungsmittel) | 343 |
| 5% Acematt TS 100 | 1090 |
| 5% CERAFLOUR 920 | 599 |
| 5% Beispiel 1 | 561 |

Der Einsatz der erfindungsgemäß zu verwendenden PHA führt im Vergleich zu der Verwendung von typischen Mattierungsmitteln, insbesondere solchen auf Siliciumdioxid-Basis, zu einer wesentlich geringeren Viskositätserhöhung der Beschichtungsstoffe.

### C2) Beschichtungssystem 2

Es wurden Beschichtungszusammensetzungen und Beschichtungen auf Basis des Beschichtungssystems 2 (vergleiche Tabelle 7) hergestellt.

**Tabelle 7: Beschichtungssystem 2), wasserbasierendes Beschichtungssystem**

| **Bestandteil** | **Menge** (in Gew.-%, bezogen auf Gesamtformulierung) |
|---|---|
| Setaqua 6756 | 90,9 |
| Wasser | 5 |
| Butylglykol | 1,8 |
| Butyldiglykol | 1,8 |
| BYK-093 | 0,3 |
| BYK-346 | 0,2 |

Setaqua 6756 (Nuplex Resins): Dispersion eines selbstvernetzenden Acrylharzes BYK-093: Mischung schaumzerstörender Polysiloxane und hydrophober Feststoffe in Polyglykol BYK-346: Polyethermodifiziertes Siloxan Die Bestandteile des Beschichtungssystems 2 wurden schrittweise in der oben angegebenen Reihenfolge unter Rühren in einem Dissolver vermischt. Danach wurden unterschiedliche der unter A) angegebenen Mattierungsmittel beigefügt und für 10 Minuten unter Rühren dispergiert. Die eingesetzten Mattierungsmittel sowie deren Gewichtsanteile (Gew.-%), jeweils bezogen auf das Gesamtgewicht der jeweiligen Formulierung, sind Tabelle 8 zu entnehmen.
Die so hergestellten Beschichtungszusammensetzungen wurden mit einem 100 µm Spiralrakel auf Kontrastkarten und mit einem 100 µm Kastenrakel auf Glasplatten aufgetragen.
Anschließend wurden die Proben für eine Woche bei 25°C zur Härtung der Beschichtungszusammensetzungen gelagert.
Tabelle 8 fasst unterschiedliche ermittelte Eigenschaften beziehungsweise Testergebnisse der hergestellten Beschichtungszusammensetzungen und Beschichtungen zusammen.

**Tabelle 8: Eigenschaften von Beschichtungszusammensetzungen und Beschichtungen, basierend auf dem Beschichtungssystem 2**

| **Additiv** | **Erscheinungsbild/ Homogenität** | **Transparenz** | **COF** | **Haptik** | **Glanz, 60°** |
|---|---|---|---|---|---|
| Kontrolle (ohne Mattierungsmittel) | ok | 1 | 0,44 | 5 | 88 |
| 2% Beispiel 4 | ok | 2-3 | 0,32 | 2-3 | 32 |
| 2% CERAFLOUR 920 | ok | 4 | 0,30 | 2 | 33 |
| 2% CERAFLOUR 928 | ok | 5 | 0,30 | 4 | 31 |
| 2% Sylysia 256NF | ok | 5 | 0,30 | 3 | 26 |
| 1% Sylysia 256NF | ok | 3-4 | 0,32 | 2 | 33 |
| 1% Beispiel 1 | | | | | |
| 1% CERAFLOUR 920 | Sedimentation | 3 | 0,32 | 2 | 33 |
| 1% Beispiel 1 | | | | | |

Durch die erfindungsgemäße Verwendung von PHA resultieren ähnlich gute Eigenschaften wie bei der Verwendung von herkömmlichen Mattierungsmitteln, insbesondere wird eine gute Mattierungseffizienz erreicht. Die Kombination eines erfindungsgemäß eingesetzten PHA mit einem Siliciumdioxid-basierenden Mattierungsmittel zeigt vorteilhafte Eigenschaften.

Ebenfalls untersucht wurden Verlauf, Schaumbildung und Kratzfestigkeit von hergestellten Beschichtungszusammensetzungen und Beschichtungen basierend auf Beschichtungssystem 2 (vergleiche Tabelle 9). Die eingesetzten Mattierungsmittel sowie deren Gewichtsanteile (Gew.-%), jeweils bezogen auf das Gesamtgewicht der jeweiligen Formulierung, sind ebenfalls angegeben.

**Tabelle 9: Verlauf, Schaumbildung und Kratzfestigkeit von Beschichtungszusammensetzungen und Beschichtungen basierend auf Beschichtungssystem 2**

| **Additiv** | **Verlauf** | **Schaumbildung** | **SATRA, Zyklen** | **Glanz 60°** | |
|---|---|---|---|---|---|
| | | | | **vor SATRA** | **nach SATRA** |
| Kontrolle (ohne Mattierungsmittel) | 1-2 | 1 | <500 | 90 | 82 |
| 2% AQUAMAT 270¹ | 3 | 1 | >4000 | 46 | 49 |
| 2% Beispiel 1 | 1-2 | 1 | >4000 | 38 | 45 |

| | | | | | |
|---|---|---|---|---|---|
| ¹ Bezogen auf den Festanteil der eingesetzten AQUAMAT 270-Dispersion | | | | | |

Wiederum sind verbesserte Eigenschaften, insbesondere eine verbesserte Mattierungseffizienz und ein verbesserter Verlauf, der erfindungsgemäßen Beschichtungszusammensetzungen und Beschichtungen im Vergleich zu herkömmlichen Beschichtungszusammensetzungen und Beschichtungen zu beobachten.

Weitere Beschichtungszusammensetzungen und Beschichtungen basierend auf Beschichtungssystem 2 wurden hinsichtlich Kraterbildung, Verlauf und Blockfestigkeit untersucht (vergleiche Tabelle 10). Die eingesetzten Mattierungsmittel sowie deren Gewichtsanteile (Gew.-%), jeweils bezogen auf das Gesamtgewicht der jeweiligen Formulierung, sind ebenfalls angegeben.

**Tabelle 10: Kraterbildung, Verlauf und Blockfestigkeit von Beschichtungszusammensetzungen und Beschichtungen basierend auf Beschichtungssystem 2**

| | **Krater** | **Verlauf** | **Blockfestigkeit** |
|---|---|---|---|
| Control | 1 | 1 | 5 |
| 1% AQUACER 539 ¹ | 1 | 1 | 1 |
| 1% Example 1 | 1 | 1 | 1 |

| | | | |
|---|---|---|---|
| ¹ Bezogen auf den Festanteil der eingesetzten AQUACER 539-Emulsion | | | |

Die erfindungsgemäßen Beschichtungszusammensetzungen und Beschichtungen zeigen vergleichbare Eigenschaften wie Beschichtungszusammensetzungen und Beschichtungen, die herkömmliche, auf petrochemischen Rohstoffen basierende Mattierungsmittel enthalten.

### C3) Beschichtungssystem 3

Es wurden Beschichtungszusammensetzungen und Beschichtungen auf Basis des Beschichtungssystems 3 (vergleiche Tabelle 11) hergestellt.

**Tabelle 11: Beschichtungssystem 3), Lösemittelbasierendes Zweikomponenten Beschichtungssystem**

| **A) Komponente 1** | |
|---|---|
| Bestandteil | Menge (in Gew.-%, bezogen auf Gesamtformulierung) |
| Desmophen 1300 BA | 41,0 |
| NC-Chips E 510 ESO (Dow) | 4,1 |
| Butylacetat | 15,5 |
| Methylisobutylketon | 10,5 |
| Methylethylketon | 16,7 |
| Dowanol MPA | 11,9 |
| BYK-323 | 0,3 |

| **B) Komponente 2** | |
|---|---|
| Desmodur HL 60 BA | 60 |
| Dowanol PMA | 14 |
| Butylacetat | 26 |

| | |
|---|---|
| Desmophen 1300 BA (Bayer Material Science): Polyesterpolyolharz NC-Chips E 510 ESO (DOW): Cellulosenitrat BYK-323: Aralkyl-modifiziertes Polymethylalkylsiloxan Desmodur HL 60 BA (Bayer Material Science): Aromatisch/aliphatisches Polyisocyanat basierend auf Toluoldiisocyanat/Hexamethylendiisocyanat | |

Die Bestandteile der Komponente 1 des Beschichtungssystems 3 wurden schrittweise in der oben angegebenen Reihenfolge unter Rühren in einem Dissolver vermischt. Danach wurden unterschiedliche der unter A) angegebenen Mattierungsmittel beigefügt und für 10 Minuten unter Rühren dispergiert. Die eingesetzten Mattierungsmittel sowie deren Gewichtsanteile (Gew.-%), jeweils bezogen auf das Gesamtgewicht der jeweiligen Formulierung, sind Tabelle 12 zu entnehmen. Für die Herstellung der Komponente 2 des Beschichtungssystems 3 wurden die in Tabelle 11 B) angegebenen Bestandteile schrittweise in der oben angegebenen Reihenfolge unter Rühren in einem Dissolver vermischt. Direkt vor der Applikation wurden die beiden Komponenten im Mengenverhältnis (Massenverhältnis) von Komponenten 1/Komponenten 2 = 2/1 gemischt.
Die so hergestellten Beschichtungszusammensetzungen wurden mit einem 100 µm Spiralrakel auf Kontrastkarten und mit einem 100 µm Kastenrakel auf Glasplatten aufgetragen. Zusätzlich wurden die Beschichtungszusammensetzungen auf Polyesterfolien (Melinex O) aufgegossen.

Anschließend wurden die Proben für 24 h bei 25°C zur Härtung der Beschichtungszusammensetzungen gelagert, wodurch die Beschichtungen auf den Substraten hergestellt wurden.

Tabelle 12 fasst die erfassten Eigenschaften beziehungsweise Testergebnisse der hergestellten Beschichtungen zusammen.

**Tabelle 12: Eigenschaften von Beschichtungen, basierend auf dem Beschichtungssystem 3**

| | | | **Gloss 60°** | | | |
|---|---|---|---|---|---|---|
| | **Glanzschleier** | **Bildschärfe** | **vor SATRA** | **nach SATRA** | **SATRA, Zyklen** | **COF** |
| Kontrolle (ohne Mattierungsmittel) | 7 | 99 | 98 | 98 | 500 | 0,16 |
| 2% Beispiel 1 | 22 | 85 | 55 | 66 | 4000 | 0,14 |
| 2% CERAFLOUR 988 | 23 | 72 | 53 | 60 | 4000 | 0,12 |
| 2% CERAFLOUR 996 | 21 | 75 | 55 | 63 | 2000 | 0,14 |
| 2% CERAFLOUR 994 | 21 | 64 | 57 | 68 | 2000 | 0,12 |
| 2% CERAFLOUR 990 | 22 | 73 | 56 | 64 | 4000 | 0,13 |

Verschiedene Eigenschaften der erfindungsgemäßen Beschichtungen sind besser oder vergleichbar mit denen der herkömmlichen Beschichtungen, die Mattierungsmittel auf Basis von petrochemischen Rohstoffen enthalten. Der Anteil petrochemischer Materialien ist demnach in den erfindungsgemäßen Beschichtungen verringert und es werden trotzdem die gezeigten hervorragenden Eigenschaften erzielt.

## Patentansprüche

1. Verwendung von Polyhydroxyalkanoaten als Additive in chemisch härtbaren und/oder strahlenhärtenden Beschichtungszusammensetzungen, wobei die Beschichtungszusammensetzungen
einen Anteil von 10 bis 90 Gew.-% selbst- oder fremdvernetzender polymerer Harze als Bindemittel und gegebenenfalls organischer Verbindungen als Vernetzungsmittel sowie
0,01-20 Gew.-% Polyhydroxyalkanoate, jeweils bezogen auf die Gesamtmenge der Beschichtungszusammensetzungen, enthalten,
und die Polyhydroxyalkanoate vor der Verwendung als Pulver in Form von Partikeln mit einer Partikelgröße von d₅₀ = 0,5 µm bis d₅₀ = 15 µm vorliegen und als solche verwendet werden, wobei die Partikelgrößenbestimmung mittels Laserbeugung erfolgt.

2. Verwendung gemäß Anspruch 1, **dadurch gekennzeichnet, dass** die Polyhydroxyalkanoate mindestens eine Art der folgenden Strukturen als Monomereinheit umfassen: 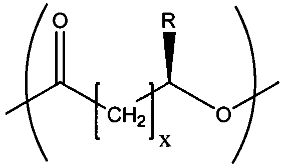 mit:
x = 1, 2, 3 oder 4,
R = H, Alkyl, Aryl, Alkenyl, Aralkyl, Halogenalkyl, Halogen, Cyano oder Epoxygruppen-, Ethergruppen-, Acylgruppen-, Estergruppen- und/oder Carboxygruppen- haltiger Rest.

3. Verwendung nach Anspruch 2, **dadurch gekennzeichnet, dass** x = 1 oder 2 und R = H oder Alkyl ist.

4. Verwendung nach Anspruch 1, **dadurch gekennzeichnet, dass** die Polyhydroxyalkanoate ein oder mehrere aus Monomeren aufgebaute Blöcke umfassen, wobei die Monomere ausgewählt werden aus der Gruppe bestehend aus 3-Hydroxybutansäure, 4-Hydroxybutansäure, 3-Hydroxyvaleriansäure, 3-Hydroxyhexansäure und 3-Hydroxyoctansäure.

5. Verwendung nach Anspruch 1, **dadurch gekennzeichnet, dass** die Polyhydroxyalkanoate Polymere und/oder Copolymere, ausgewählt aus der Gruppe bestehend aus Poly-3-hydroxybutyrat, Poly-3-hydroxybutyrat-*co*-3-hydroxyvalerianat, Poly-3-hydroxybutyrat-*co*-4-hydroxy-butyrat, und Poly-3-hydroxybutyrat-co-3-hydroxyvalerianat-*co*-4-hydroxybutyrat, sind.

6. Verwendung nach einem der Ansprüche 1 bis 5, **dadurch gekennzeichnet, dass** die Polyhydroxyalkanoate vor der Verwendung als Pulver in Form von Partikeln mit einer Partikelgröße von d₅₀ = 0,5 µm bis d₅₀ = 7 µm vorliegen und als solche verwendet werden.

7. Verwendung nach einem der Ansprüche 1 bis 6, **dadurch gekennzeichnet, dass** das mindestens eine Polyhydroxyalkanoat in der Beschichtungszusammensetzung einen Anteil von 0,5 bis 10 Gew.-%, bezogen auf die Gesamtmenge der Beschichtungszusammensetzung, hat.

8. Verwendung nach einem der Ansprüche 1 bis 7, **dadurch gekennzeichnet, dass** die Polyhydroxyalkanoate als Mattierungsmittel, als Additiv zur Verbesserung der haptischen Eigenschaften, als Additiv zur Verbesserung der Kratzfestigkeit und/oder als Additiv zur Verbesserung der Blockfestigkeit verwendet werden.

9. Verwendung nach Anspruch 8, **dadurch gekennzeichnet, dass** die Polyhydroxyalkanoate als Mattierungsmittel verwendet werden.

10. Beschichtungszusammensetzung enthaltend Polyhydroxyalkanoate als Additive, **dadurch gekennzeichnet, dass** die Beschichtungszusammensetzung 0,01-20 Gew.-% Polyhydroxyalkanoate, jeweils bezogen auf die Gesamtmenge der Beschichtungszusammensetzung, enthält, und dass die Beschichtungszusammensetzung mindestens ein selbst- oder fremdvernetzendes polymeres Harz als Bindemittel ausgewählt aus der Gruppe der Polyurethan-, Polyester-, Polyesterpolyol-, Acryl-, Polyacrylat-, Polymethacrylat-, Polyesteracrylat-, Epoxid-, und/oder Alkydharze und gegebenenfalls mindestens ein Vernetzungsmittel in einem Gesamtanteil von 15 bis 99,5 Gew.-% und mindestens ein Lösemittel in einem Anteil von 0 bis 84,99 Gew.-%, jeweils bezogen auf die Gesamtmenge der Beschichtungszusammensetzung, enthält, und dass die Beschichtungszusammensetzung chemisch härtbar und/oder strahlenhärtend ist, wobei die Polyhydroxyalkanoate als Pulver in Form von Partikeln mit einer Partikelgröße von d₅₀ = 0,5 µm bis d₅₀ = 15 µm vorliegen und die Partikelgrößenbestimmung mittels Laserbeugung erfolgt.

11. Beschichtungszusammensetzung gemäß Anspruch 10, **dadurch gekennzeichnet, dass** die Polyhydroxyalkanoate mindestens eine Art der folgenden Strukturen als Monomereinheit umfassen: 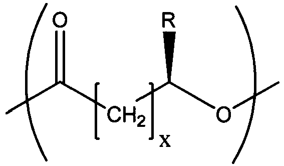 mit:
x = 1, 2, 3 oder 4,
R = H, Alkyl, Aryl, Alkenyl, Aralkyl, Halogenalkyl, Halogen, Cyano oder Epoxygruppen-, Ethergruppen-, Acylgruppen-, Estergruppen- und/oder Carboxygruppen- haltiger Rest.

12. Beschichtungszusammensetzung gemäß Anspruch 10, **dadurch gekennzeichnet, dass** die Polyhydroxyalkanoate Polymere und/oder Copolymere, ausgewählt aus der Gruppe bestehend aus Poly-3-hydroxybutyrat, Poly-3-hydroxybutyrat-*co*-3-hydroxyvalerianat, Poly-3-hydroxybutyrat-*co*-4-hydroxy-butyrat, und Poly-3-hydroxybutyrat-*co*-3-hydroxyvalerianat-*co*-4-hydroxybutyrat, sind.

13. Beschichtungszusammensetzung gemäß einem der Ansprüche 10 bis 12, **dadurch gekennzeichnet, dass** die Polyhydroxyalkanoate Mattierungsmittel sind.

14. Beschichtung, hergestellt auf einem Substrat mit einer Beschichtungszusammensetzung gemäß einem der Ansprüche 10 bis 13.

## Claims

1. The use of polyhydroxyalkanoates as additives in chemically curable and/or radiation-curing coating compositions, where the coating compositions comprise
a fraction of 10 to 90 wt% of self-crosslinking or externally crosslinking polymeric resins as binders and optionally organic compounds as crosslinking agents and also
0.01-20 wt% of polyhydroxyalkanoates, based in each case on the total amount of the coating compositions,
wherein the polyhydroxyalkanoates prior to use are present as powder in the form of particles having a particle size of d₅₀ = 0.5 µm to d₅₀ = 15 µm and are used as such, wherein the particle size is determined by means of laser diffraction.

2. The use as claimed in claim 1, **characterized in that** the polyhydroxyalkanoates comprise at least one kind of the following structures as monomer unit: 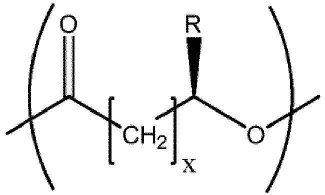 where:
x = 1, 2, 3, or 4;
R = H, alkyl, aryl, alkenyl, aralkyl, haloalkyl, halogen, or cyano, or radical containing epoxy groups, ether groups, acyl groups, ester groups and/or carboxyl groups.

3. The use as claimed in claim 2, **characterized in that** x = 1 or 2 and R = H or alkyl.

4. The use as claimed in claim 1, **characterized in that** the polyhydroxyalkanoates comprise one or more blocks constructed from monomers, the monomers being selected from the group consisting of 3-hydroxybutanoic acid, 4-hydroxybutanoic acid, 3-hydroxyvaleric acid, 3-hydroxyhexanoic acid and 3-hydroxyoctanoic acid.

5. The use as claimed in claim 1, **characterized in that** the polyhydroxyalkanoates are polymers and/or copolymers selected from the group consisting of poly-3-hydroxybutyrate, poly-3-hydroxybutyrate-*co*-3-hydroxyvalerate, poly-3-hydroxybutyrate-*co*-4-hydroxybutyrate, and poly-3-hyd roxybutyrate-*co-*3-hydroxyvalerate-*co*-4-hydroxybutyrate.

6. The use as claimed in any of claims 1 to 5, **characterized in that** the polyhydroxyalkanoates prior to use are present as powder in the form of particles having a particle size of d₅₀ = 0.5 µm to d₅₀ = 7 µm and are used as such.

7. The use as claimed in any of claims 1 to 6, **characterized in that** the at least one polyhydroxyalkanoate has a fraction in the coating composition of 0.5 to 10 wt%, based on the total amount of the coating composition.

8. The use as claimed in any of claims 1 to 7, **characterized in that** the polyhydroxyalkanoates are used as matting agents, as additive for improving the tactile qualities, as additive for improving the scratch resistance and/or as additive for improving the blocking resistance.

9. The use as claimed in claim 8, **characterized in that** the polyhydroxyalkanoates are used as matting agents.

10. A coating composition comprising polyhydroxyalkanoates as additives, **characterized in that** the coating composition comprises 0.01-20 wt% of polyhydroxyalkanoates, based in each case on the total amount of the coating composition, and **in that** the coating composition comprises at least one self-crosslinking or externally crosslinking polymeric resin as binder selected from the group of polyurethane, polyester, polyester polyol, acrylic, polyacrylate, polymethacrylate, polyester acrylate, epoxy and/or alkyd resins and optionally at least one crosslinking agent in a total fraction of 15 to 99.5 wt% and at least one solvent in a fraction of 0 to 84.99 wt%, based in each case on the total amount of the coating composition, and **in that** the coating composition is a chemically curable and/or radiation-curing coating composition, wherein the polyhydroxyalkanoates are present as powder in the form of particles having a particle size of d₅₀ = 0.5 µm to d₅₀ = 15 µm, wherein the particle size is determined by means of laser diffraction.

11. The coating composition as claimed in claim 10, **characterized in that** the polyhydroxyalkanoates comprise at least one kind of the following structures as monomer unit: 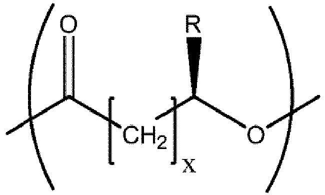 where:
x = 1, 2, 3, or 4;
R = H, alkyl, aryl, alkenyl, aralkyl, haloalkyl, halogen, or cyano, or radical containing epoxy groups, ether groups, acyl groups, ester groups and/or carboxyl groups.

12. The coating composition as claimed in claim 10, **characterized in that** the polyhydroxyalkanoates are polymers and/or copolymers selected from the group consisting of poly-3-hydroxybutyrate, poly-3-hydroxybutyrate-*co-*3-hydroxyvalerate, poly-3-hydroxybutyrate-*co*-4-hydroxybutyrate, and poly-3-hydroxybutyrate-*co*-3-hydroxyvalerate-*co*-4-hydroxybutyrate.

13. The coating composition as claimed in any of claims 10 to 12, **characterized in that** the polyhydroxyalkanoates are matting agents.

14. A coating produced on a substrate with a coating composition as claimed in any of claims 10 to 13.

## Revendications

1. Utilisation des polyhydroxyalcanoates comme additifs dans des compositions de revêtement durcissables chimiquement et/ou par radiation, les compositions de revêtement contenant
une proportion de 10 à 90 % en poids des résines polymériques auto-réticulantes ou avec réticulation externe en tant que liant, et le cas échéant des composés organiques en tant qu'agents de réticulation, et
0,01 - 20 % en poids des polyhydroxyalcanoates, respectivement par rapport à la quantité totale des compositions de revêtement,
et les polyhydroxyalcanoates, avant l'utilisation, sont présents sous forme de poudre des particules avec une taille de particules de d₅₀ = 0,5 µm à _{d}50 = 15 µm, et sont utilisés en tant que tels, la taille de particules étant déterminée par diffraction laser.

2. Utilisation selon la revendication 1, **caractérisée en ce que** les polyhydroxyalcanoates comprennent au moins un type des structures suivantes en tant qu'unité monomère : 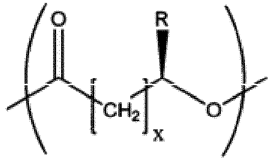 avec :
x = 1, 2, 3 ou 4,
R = H, alkyle, aryle, alcényle, aralkyle, haloalkyle, halogène, cyano ou un radical contenant des groupes époxy, des groupes éther, des groupes acyle, des groupes ester et/ou des groupes carboxy.

3. Utilisation selon la revendication 2, **caractérisée en ce que** x = 1 ou 2 et R = H ou alkyle.

4. Utilisation selon la revendication 1, **caractérisée en ce que** les polyhydroxyalcanoates comprennent un ou plusieurs blocs structurés par monomères, les monomères étant choisis dans le groupe consistant en l'acide 3-hydroxybutanoïque, l'acide 4-hydroxybutanoïque, l'acide 3-hydroxyvalérique, l'acide 3-hydroxyhexanoïque et l'acide 3-hydroxyoctanoïque.

5. Utilisation selon la revendication 1, **caractérisée en ce que** les polyhydroxyalcanoates sont des polymères et/ou copolymères choisis dans le groupe consistant en poly-3-hydroxybutyrate, le poly-3-hydroxybutyrat-*co*-3-hydroxyvalérianate, le poly-3-hydroxybutyrat-*co*-4-hydroxy-butyrate, et le poly-3-hydroxybutyrat-*co*-3-hydroxybutyrate-hydroxyvalérianate-co-4-hydroxybutyrate.

6. Utilisation selon l'une des revendications 1 à 5, **caractérisée en ce que,** avant l'utilisation, les polyhydroxyalcanoates sont présents sous forme de poudre des particules avec une taille de particules de d₅₀ = 0,5 µm à d₅₀ = 7 µm, et sont utilisés en tant que tels.

7. Utilisation selon l'une quelconque des revendications 1 à 6, **caractérisée en ce que** l'au moins un polyhydroxyalcanoate dans la composition de revêtement a une proportion de 0,5 à 10 % en poids par rapport à la quantité totale de la composition de revêtement.

8. Utilisation selon l'une quelconque des revendications 1 à 7, **caractérisée en ce que** les polyhydroxyalcanoates sont utilisés comme agents matants, comme additifs pour améliorer les propriétés haptiques, comme additifs pour améliorer la résistance aux rayures et/ou comme additifs pour améliorer la résistance au blocage.

9. Utilisation selon la revendication 8, **caractérisée en ce que** les polyhydroxyalcanoates sont utilisés comme agents matants.

10. Composition de revêtement contenant des polyhydroxyalcanoates comme additifs, **caractérisée en ce que** la composition de revêtement contient de 0,01 à 20 % en poids des polyhydroxyalcanoates, respectivement par rapport à la quantité totale de la composition de revêtement, et **en ce que** la composition de revêtement contient au moins une résine polymérique auto-réticulante ou avec réticulation externe en tant que liant, choisie dans le groupe consistant en des résines polyuréthane, polyester, polyester-polyole, acrylique, polyacrylate, polyméthacrylate, polyesteracrylate, époxy et/ou alkydes, et le cas échéant au moins un agent réticulant dans une proportion totale de 15 à 99,5 % en poids, et au moins un solvant dans une proportion de 0 à 84,99 % en poids, respectivement par rapport à la quantité totale de la composition de revêtement, et **en ce que** la composition de revêtement et durcissable chimiquement et/ou par radiation, les polyhydroxyalcanoates étant présents sous forme de poudre des particules avec une taille de particules de d₅₀ = 0,5 µm à d₅₀ = 15 µm, et la détermination de la taille de particules étant effectuée par diffraction laser.

11. Composition de revêtement selon la revendication 10, **caractérisée en ce que** les polyhydroxyalcanoates comprennent au moins un type des structures suivantes en tant qu'unité monomère : 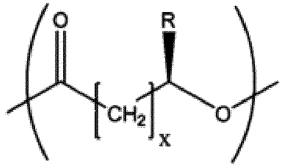 avec :
x = 1, 2, 3 ou 4,
R = H, alkyle, aryle, alcényle, aralkyle, haloalkyle, halogène, cyano ou un radical contenant des groupes époxy, des groupes éther, des groupes acyle, des groupes ester et/ou des groupes carboxy.

12. Composition de revêtement selon la revendication 10, **caractérisée en ce que** les polyhydroxyalcanoates sont des polymères et/ou copolymères choisis dans le groupe consistant en poly-3-hydroxybutyrate, le poly-3-hydroxybutyrat-*co*-3-hydroxyvalérianate, le poly-3-hydroxybutyrat-co-4-hydroxybutyrate, et le poly-3-hydroxybutyrat-*co*-3-hydroxybutyrate-hydroxyvalérianate-*co*-4- hydroxybutyrate.

13. Composition de revêtement selon l'une quelconque des revendications 10 à 12, **caractérisée en ce que** les polyhydroxyalcanoates sont des agents matants.

14. Revêtement fabriqué sur un substrat avec une composition de revêtement selon l'une quelconque des revendications 10 à 13.
